(19) **Europäisches Patentamt / European Patent Office / Office européen des brevets**

(11) **EP 1 738 220 B1**

(12) **FASCICULE DE BREVET EUROPEEN**

(45) Date de publication et mention
de la délivrance du brevet:
**10.10.2007 Bulletin 2007/41**

(21) Numéro de dépôt: **05731111.0**

(22) Date de dépôt: **23.02.2005**

(51) Int Cl.:
**G02F 1/39** (2006.01)

(86) Numéro de dépôt international:
**PCT/FR2005/000418**

(87) Numéro de publication internationale:
**WO 2005/111711 (24.11.2005 Gazette 2005/47)**

(54) **OSCILLATEUR PARAMETRIQUE OPTIQUE DOUBLEMENT RESONNANT A RETOUR DE POMPE ADAPTE**

DOPPELRESONANTER OPTISCHER PARAMETRISCHER OSZILLATOR MIT ANGEPASSTEM PUMPEN-RECYCLING

DOUBLY-RESONANT OPTICAL PARAMETRIC OSCILLATOR WITH ADAPTED PUMP RECYCLING

(84) Etats contractants désignés:
**CH DE FR GB LI LT**

(30) Priorité: **20.04.2004 FR 0404128**

(43) Date de publication de la demande:
**03.01.2007 Bulletin 2007/01**

(73) Titulaire: **OFFICE NATIONAL D'ETUDES ET DE RECHERCHES AEROSPATIALES (ONERA)**
**92320 Chatillon sous Bagneux (FR)**

(72) Inventeurs:
• **LEFEBVRE, Michel**
  **F-91400 Orsay (FR)**
• **DESORMEAUX, Aude**
  **F-78000 Versailles (FR)**
• **ROSENCHER, Emmanuel**
  **F-92220 Bagneux (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
• **BJORKHOLM J E ET AL: "Improvement of optical parametric oscillators by nonresonant pump reflection" IEEE JOURNAL OF QUANTUM ELECTRONICS USA, vol. QE-6, no. 12, 1 décembre 1970 (1970-12-01), pages 797-799, XP002309981 ISSN: 0018-9197 cité dans la demande**
• **COLUCCI G ET AL: "Analysis of integrated optics parametric oscillators" IEEE JOURNAL OF QUANTUM ELECTRONICS USA, vol. 28, no. 3, 1 mars 1992 (1992-03-01), pages 729-738, XP002309982 ISSN: 0018-9197**
• **YUNPING WANG ET AL: "HIGHLY EFFICIENT VISIBLE AND INFRARED B-BAB2O4 OPTICAL PARAMETRIC OSCILLATOR WITH PUMP REFLECTION" APPLIED PHYSICS LETTERS, AMERICAN INSTITUTE OF PHYSICS. NEW YORK, US, vol. 58, no. 14, 8 avril 1991 (1991-04-08), pages 1461-1463, XP000209754 ISSN: 0003-6951**

**Description**

La présente invention est relative aux oscillateurs paramétriques optiques doublement résonnants à géométrie linéaire ou repliée.

Les oscillateurs paramétriques optiques (OPO) sont des convertisseurs de fréquences qui, à partir d'un rayonnement laser de pulsation $\omega_p$ (pompe), produisent deux nouveaux rayonnements appelés signal et complémentaire, de pulsations respectives $\omega_s$ et $\omega_c$ telles que $\omega_p = \omega_s + \omega_c$.

La conversion paramétrique de fréquences s'obtient en faisant propager le rayonnement pompe au travers d'un composant, généralement un cristal, présentant une non linéarité optique d'ordre 2. Si les paramètres physiques du cristal tels que sa température, son incidence par rapport au rayonnement pompe ou encore la périodicité de ses domaines ferroélectriques (comme le retournement périodique dans le cas d'un cristal tel que le niobate de lithium) sont modifiés, les valeurs $\omega_s$ et $\omega_c$ peuvent être ajustées sur une très large gamme.

Ainsi, un OPO est une source de lumière cohérente qui offre une très large gamme d'accord spectral, bien supérieure à celle des lasers. Cette caractéristique essentielle ouvre de nombreux champs d'applications aux OPO comme, par exemples, l'analyse spectroscopique des gaz, la détection à distance ou le refroidissement d'atomes.

Dans la pratique, le cristal est inséré à l'intérieur d'un résonateur optique de façon à ce que les rayonnements impliqués effectuent un grand nombre de passages au travers du cristal. L'intensité du rayonnement pompe peut alors être transférée efficacement vers les rayonnements signal et complémentaire. Un rendement de conversion de 30 % est couramment atteint.

Les OPO, outre leur fonctionnement en mode continu ou impulsionnel, sont classés en trois catégories appelées simplement, doublement ou triplement résonnant suivant que le résonateur optique permet de faire osciller soit exclusivement un rayonnement à la pulsation $\omega_s$ ou $\omega_c$, soit simultanément deux rayonnements aux pulsations $\omega_s$ et $\omega_c$, soit enfin les trois rayonnements aux pulsations $\omega_s$, $\omega_c$ et $\omega_p$. Pour les deux premières catégories, le rayonnement pompe peut être appliqué au cristal suivant une géométrie à double passage. L'OPO est alors qualifié de simplement ou doublement résonnant avec retour de pompe.

L'augmentation du nombre de rayonnements oscillant dans le résonateur, donc traversant le cristal, conduit à une réduction significative de l'intensité du rayonnement pompe qu'il faut appliquer au cristal pour compenser les pertes du résonateur.

C'est pourquoi, avec les OPO doublement ou triplement résonnant, une intensité du rayonnement pompe modérée délivrée par un laser de petite taille est satisfaisante.

En contre partie, le contenu spectral devient généralement plus difficile à maîtriser et le fonctionnement de l'OPO doublement ou triplement résonnant peut devenir instable suivant les caractéristiques du rayonnement pompe.

L'utilisation de résonateurs à double ou à triple cavités permet de s'affranchir de ce problème. Les longueurs optiques vues par les différents rayonnements peuvent être ajustées séparément dans ce type de résonateur et, en conséquence, les fréquences de résonance ou modes longitudinaux des différentes cavités peuvent eux aussi être ajustés. Ainsi, il a été précédemment démontré [B. Scherrer, I. Ribet, A. Godard, E. Rosencher, M. Lefebvre, "Dual-cavity doubly resonant optical parametric oscillators : démonstration of pulsed single-mode operation", J. Opt. Soc. Am. B, vol17, n°10, pp 1716-1729 (2000)] que, par effet Vernier, il est possible de produire de façon stable une émission ayant un spectre pur à partir d'un OPO doublement résonnant à cavités séparées. De plus, les résonateurs à cavités multiples permettent d'accorder continûment la fréquence émise par l'OPO en ajustant séparément les longueurs de chaque cavité.

Ainsi, les OPO doublement résonnant à cavités séparées ont deux avantages majeurs. D'une part, ils présentent un contenu spectral maîtrisable et, d'autre part, ils ont un faible seuil d'oscillation. Le seuil d'oscillation est défini classiquement comme étant l'intensité minimale du rayonnement pompe qu'il faut appliquer au cristal pour compenser les pertes du résonateur et atteindre l'oscillation paramétrique.

Ce type d'OPO est mis en oeuvre suivant trois géométries : en anneau, repliée ou linéaire. Comme mentionné ci-dessous, chaque géométrie présente ses avantages mais aussi ses limitations.

Historiquement, le premier OPO doublement résonnant à cavités séparées a été conçu suivant une géométrie en anneau [A. Ashkin, J.E. Bjorkholm, "Ring-type parametric oscillator", brevet US 3 628 182, (1971)] pour laquelle les trois rayonnements (pompe, signal et complémentaire) traversent le cristal toujours dans la même direction. Cette géométrie permet d'atteindre un rendement de conversion élevé, notamment en cas de fonctionnement en mode continu. Cependant, la séparation des rayonnements signal et complémentaire conduit nécessairement à la mise en oeuvre de cavités de grandes longueurs pour lesquelles le temps de parcours des rayonnements à l'intérieur du résonateur peut être long, au point d'empêcher le fonctionnement en régime impulsionnel. De plus, la géométrie en anneau se prête difficilement à la réalisation de sources compactes et robustes.

En géométrie repliée ou linéaire, les rayonnements signal et complémentaire effectuent de nombreux allers et retours dans le résonateur et traversent donc le cristal dans les deux directions alors que le rayonnement pompe ne se propage que suivant une direction. Les cavités signal et complémentaire peuvent avoir un miroir commun [F.G. Colville, M.J. Padgett, M. H. Dunn, "Continuous wave, dual-cavity, doubly resonant, optical parametric oscillator", Appl. Phys. Lett. 64, 1490-1492 (1994)] ou être totalement découplées [B. Scherrer, M. Lefebvre, "Oscillateur paramétrique optique impulsionnel monomode", brevet EP 0855616]. Cette dernière configuration permet de limiter les couplages parasites entre chaque cavité qui entraînent des variations importantes du seuil d'oscillation de l'OPO [D. Lee, N. C. Wong, Appl. Phys. B 66, 133-143 (1998)], variations fortement pénalisantes pour l'accord en fréquence de la source.

Ainsi, la géométrie linéaire semble la plus appropriée à la réalisation de sources compactes, monolithiques, présentant un faible coût de fabrication car pouvant être réalisées en grande quantité suivant les techniques d'élaboration verticale initialement développées pour la microélectronique [voir par exemple L. Fulbert, E. Molva, P. Thony, "micro-laser pumped monolithic optical parametric oscillator", brevet US 5 754 333, (1998)].

Toutefois, la mise en oeuvre de cavités linéaires et plus largement, de cavités fonctionnant avec des allers et retours des différents rayonnements (géométries linéaire ou repliée), présente une limitation majeure qui est liée à un processus de reconversion des rayonnements signal et complémentaire en un rayonnement pompe inverse.

De façon générale, le processus de reconversion s'établit dès que les rayonnements signal et complémentaire traversent seuls le cristal non linéaire dans la même direction. Ce processus n'existe donc pas dans les cavités en anneau dans lesquelles les trois rayonnements circulent toujours dans la même direction. En revanche, en géométrie linéaire ou repliée, la reconversion s'établit systématiquement à chaque retour des rayonnements signal et complémentaire.

Ce processus de reconversion est gênant à double titre. D'une part, en agissant à l'encontre de la conversion paramétrique, il limite le rendement de l'OPO. D'autre part, en produisant un rayonnement qui se propage vers le laser de pompe, il en perturbe le fonctionnement si une isolation optique suffisante n'est pas interposée.

Il est possible de limiter très sensiblement l'effet néfaste du processus de reconversion sur le rendement de l'OPO en mettant en oeuvre une géométrie à double passage pour laquelle tout ou partie de l'intensité du rayonnement de pompe sortant du cristal est réfléchie vers le cristal [J.E. Bjorkholm, A. Ashkin, R. G. Smith, 'Improvement of optical parametric oscillators by non resonant pump reflection', IEEE, J. of Quant. Electron., QE-6, n°12, pp 797-799, (1970)]. Le rendement optimal de l'OPO est alors obtenu lorsque, en sortie de cristal, l'égalité suivante :

$$\varphi_p - \varphi_s - \varphi_c = 0 \ [2\pi] \qquad (I)$$

est vérifiée, avec $\varphi_p$, $\varphi_s$ et $\varphi_c$ étant respectivement les phases des rayonnements pompe, signal et complémentaire retours. Dans la pratique, il convient donc que l'expression $\varphi_p - \varphi_s - \varphi_c$ tende vers 0, modulo $2\pi$. L'analyse théorique du comportement de l'OPO en cas de fonctionnement en mode continu montre de plus, que lorsque l'égalité (I) est vérifiée et que la totalité du rayonnement pompe sortant est réfléchie, le seuil d'oscillation de l'OPO est réduit d'un facteur 4 et la largeur de gain paramétrique est réduite d'environ un facteur 2, ce qui facilite l'obtention du fonctionnement monomode longitudinal décrit dans EP 0855616. La largeur de gain est définie classiquement comme étant la gamme de fréquence sur laquelle la conversion paramétrique peut s'établir. Le double passage du rayonnement pompe permet donc d'améliorer très sensiblement les performances des OPO doublement résonnants à géométrie linéaire ou repliée. Il n'en reste pas moins vrai que le rayonnement pompe retour vers le laser de pompe reste une limitation majeure.

Ainsi, de l'analyse précédente, il ressort que les OPO doublement résonnant conçus suivant les géométries de l'art antérieur ne sont pas pleinement satisfaisants.

La présente invention vise à réaliser des oscillateurs paramétriques optiques doublement résonnants robustes et compacts ayant un processus de reconversion réduit tout en présentant un faible rayonnement pompe retour quelque soit le mode de fonctionnement, continu ou impulsionnel.

Un oscillateur paramétrique optique doublement résonnant selon l'invention comporte un cristal non linéaire, un rayonnement pompe entrant effectuant un seul trajet aller à travers le cristal et sortant de celui-ci par sa face arrière, un rayonnement signal et un rayonnement complémentaire effectuant de nombreux trajets allers et retours à travers le cristal, ces deux derniers rayonnements se reconvertissant en un rayonnement pompe inverse lors de leurs trajets retours à travers le cristal, un dispositif réfléchissant une fraction de l'intensité du rayonnement de pompe sortant de la face arrière du cristal de telle sorte que, en sortie de cristal, la relation de phase $\varphi_p - \varphi_s - \varphi_c = 0 \ [2\pi]$ soit vérifiée. Cet oscillateur se caractérise en ce que la fraction réfléchie de l'intensité du rayonnement pompe est voisine, voire égale à l'intensité du rayonnement pompe inverse en l'absence du dispositif réfléchissant. Cette fraction est appelée retour de pompe adapté.

Ainsi un laser délivre le rayonnement pompe entrant dans le cristal de l'OPO qui produit les deux rayonnements signal et complémentaire dans deux cavités séparées, disposées suivant une géométrie linéaire ou repliée de l'art antérieur. En aval du cristal, ledit dispositif permet de réfléchir, avec une phase ajustable, une fraction de l'intensité du rayonnement pompe sortant du cristal. La fraction optimale de l'intensité du rayonnement pompe sortant du cristal est telle qu'elle soit égale ou au moins voisine de l'intensité du rayonnement pompe qui serait produite, par reconversion dans le cristal, des rayonnements signal et complémentaire lors de leurs trajets retours en absence du dispositif.

Le rendement optimal de l'OPO selon l'invention est obtenu lorsque, en sortie du cristal, les phases des rayonnements retour vérifient l'égalité (I).

L'intensité du rayonnement pompe retour en direction du laser est alors minimale et les maxima d'intensité dans le cristal, provoqués par les interférences entre le champ du rayonnement pompe entrant et le champs du rayonnement pompe réfléchi, sont réduits.

Le retour de pompe adapté de l'OPO peut être obtenu par réflexion de Fresnel sur une surface optique. Cette surface peut être dépourvue de traitement optique. Elle présente alors un faible coût de fabrication.

La face arrière du cristal peut assurer le retour de pompe adapté. Dans ce cas, le cristal est réalisé dans un matériau de longueur optique variable afin de pouvoir ajuster la phase du retour de pompe adapté.

Dans une variante de réalisation, le dispositif de l'invention comporte un disque, réalisé dans un matériau de longueur optique variable, dont la face arrière est partiellement réfléchissante au rayonnement pompe sortant.

Selon cette réalisation, le disque peut former un seul bloc avec le cristal. Les faces avant et arrière de ce disque, planes, peuvent ne pas être parallèles afin de découpler optiquement les cavités des rayonnements signal et complémentaire.

Ainsi, la géométrie à retour de pompe adapté proposée dans l'invention permet d'améliorer sensiblement les performances des OPO doublement résonnants à géométries linéaire ou repliée sans introduire les défauts inhérents aux géométries à double passage de l'art antérieur.

D'autres caractéristiques et avantages de l'invention ressortiront de la description qui suit et des exemples de réalisation non limitatifs.

Les dessins annexés illustrent l'invention :

- La figure 1, présente schématiquement la mise en oeuvre de l'invention ;
- Les figures 2, 3 et 4 présentent les courbes mettant en évidence les conditions requises pour optimiser le retour de pompe adapté, objet de l'invention ;
- La figure 5 est relative à une mise en oeuvre de l'invention en géométrie repliée de l'art antérieur ;
- La figure 6 est relative à une mise en oeuvre de l'invention en géométrie linéaire de l'art antérieur, avec filtrage du rayonnement signal en sortie d'oscillateur paramétrique optique ;
- La figure 7 est relative à une mise en oeuvre de l'invention en géométrie linéaire de l'art antérieur, avec filtrage du rayonnement signal en entrée d'oscillateur paramétrique optique ;
- La figure 8 illustre une mise en oeuvre de l'invention en géométrie linéaire semi monolithique avec des cavités totalement découplées pour les rayonnements signal et complémentaire;
- La figure 9 présente une mise en oeuvre de l'invention pour laquelle le cristal non linéaire assure la double fonction : conversion paramétrique et adaptation du retour de pompe ;
- La figure 10 présente une mise en oeuvre de l'invention en géométrie linéaire semi monolithique avec un miroir commun pour les rayonnements signal et complémentaire;
- Les figures 11 et 12 illustrent des mises en oeuvre de l'invention en géométrie linéaire entièrement monolithiques.

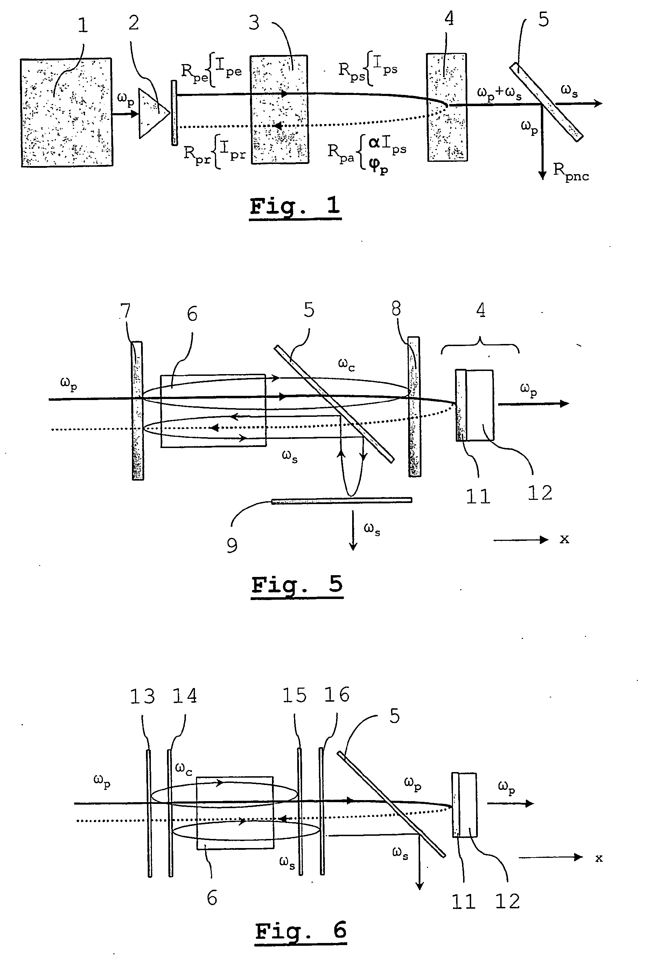

L'invention est fondée sur une géométrie dite à retour de pompe adapté. La figure 1 en donne un schéma général de mise en oeuvre. Un laser de pompe 1 de pulsation $\omega_p$ délivre, en sortie d'un isolateur optique 2, un rayonnement pompe entrant, $R_{pe}$, d'intensité $I_{pe}$ qui traverse un OPO doublement résonnant 3 conçu suivant une géométrie linéaire ou repliée de l'art antérieur. A la sortie de l'OPO, un dispositif 4 permet de réfléchir, avec une phase $\varphi_p$ ajustable, une fraction $\alpha$ de l'intensité $I_{ps}$ du rayonnement pompe sortant, $R_{ps}$, de la face arrière du cristal. Le rayonnement signal à la pulsation $\omega_s$ est disponible en fin de chaîne après avoir été filtré du rayonnement pompe non converti, $R_{pnc}$, au moyen de la lame 5. L'invention se caractérise en ce que le dispositif 4 permet de réfléchir la fraction $\alpha$ de l'intensité $I_{ps}$ du rayonnement pompe sortant ($R_{ps}$) du cristal telle que l'intensité $\alpha I_{ps}$ soit voisine, voire égale à celle du rayonnement pompe inverse qui serait produit par reconversion des rayonnements signal et complémentaire retours dans le cristal de l'OPO en absence du dispositif. Le rendement optimal de l'OPO est obtenu lorsque le rayonnement pompe réfléchi, $R_{pa}$, s'oppose au processus de reconversion tant en amplitude qu'en phase, donc lorsque $\varphi_p$ satisfait l'égalité (I).

En cours de fonctionnement, la phase $\varphi_p$ du rayonnement pompe réfléchi peut être ajustée et maintenue automatiquement à son optimum en utilisant une boucle d'asservissement classique, de type PID (Proportionnelle, Intégrale, Dérivée), non représentée sur le schéma de la figure 1.

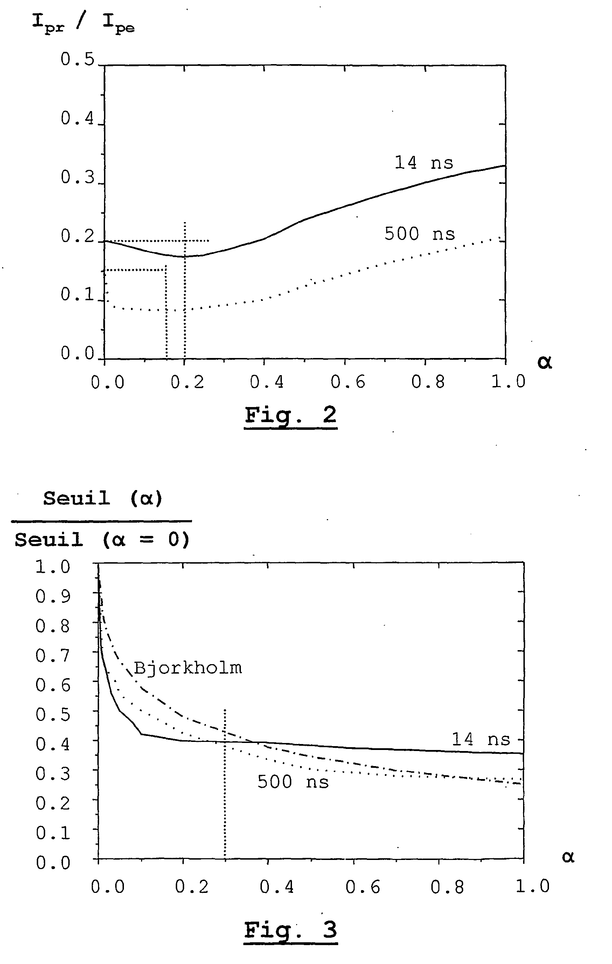

Les figures 2 et 3 précisent les conditions particulières de mise en oeuvre de l'invention. Les courbes présentées sont issues d'une modélisation numérique du comportement d'un OPO doublement résonnant conçu suivant une géométrie linéaire. Les évolutions théoriques sont calculées en suivant une méthode numérique [C. Drag, I. Ribet, M. Jeandron, M. Lefebvre, E. Rosencher, 'Temporal behaviour of a high repetition rate infrared optical parametric oscillator based on periodically poled materials', Appl. Phys. B, 73, pp 195-200, (2001)] après avoir introduit l'influence du retour de pompe pour la condition de phases de (I). L'intensité $I_{pe}$ du rayonnement pompe entrant ($R_{pe}$) est fixe et égale à trois fois celle permettant d'atteindre le seuil d'oscillation de sorte qu'un rendement de conversion élevé est assuré tout en maintenant une bonne qualité de rayonnement. Les simulations sont réalisées dans le cadre d'un fonctionnement impulsionnel, mais pour des impulsions du rayonnement pompe de durées très différentes (14,5 et 500 ns) afin de préciser la dépendance de l'intensité $I_{pr}$ du rayonnement pompe retour $R_{pr}$ renvoyée vers le laser en fonction de la fraction $\alpha$ du rayonnement pompe réfléchi tant en régime impulsionnel qu'en régime quasi-continu. Entre les deux valeurs extrêmes de cette fraction $\alpha$, la première pour $\alpha = 0$, où l'intensité $I_{pr}$ est égale à l'intensité du rayonnement pompe inverse créé par le processus de reconversion et la deuxième pour $\alpha = 1$, où l'intensité $I_{pr}$ s'accroît du fait de la réflexion du rayonnement de pompe sortant, la fonction passe par un minima. Celui-ci est obtenu pour $\alpha = 0,2$ pour des impulsions du rayonnement pompe de 14 ns et $\alpha = 0,15$ pour des impulsions du rayonnement pompe de 500 ns. En remarquant que pour la première valeur extrême $\alpha = 0$, $I_{pr}/I_{pe} = 0,2$ pour des impulsions du rayonnement pompe de 14 ns et $T_{pr}/I_{pe} = 0,15$ pour des impulsions du rayonnement pompe de 500 ns, il est ainsi confirmé que l'intensité du rayonnement pompe renvoyée vers le laser est minimale lorsque la fraction d'intensité réfléchie est comparable à celle produite par reconversion dans l'OPO sans retour du rayonnement pompe. La figure 2 montre aussi que plus la durée des impulsions du rayonnement pompe est longue, plus la gamme de retour de rayonnement pompe minimal est large. Ainsi, pour des impulsions du rayonnement pompe de 500 ns, il suffit de maintenir la valeur de $\alpha$ comprise entre 0,1 et 0,3 pour assurer une adaptation correcte du retour de pompe.

La figure 3 présente l'évolution du seuil d'oscillation de l'OPO en fonction de la fraction du rayonnement pompe réfléchi. Comme précédemment, les calculs sont effectués pour des impulsions du rayonnement pompe de durées de 14,5 et 500 ns. De plus, l'évolution en régime continu obtenu à partir de la relation 6 de [J.E. Bjorkholm, A. Ashkin, R. G. Smith, 'Improvement of optical parametric oscillators by non resonant pump reflection', IEEE, J. of Quant. Electron., QE-6, n°12, pp 797-799, (1970)] est présentée. Cette figure montre clairement qu'une réflexion de 10 à 30 % du rayonnement pompe suffit pour réduire de façon significative le seuil d'oscillation. Ainsi, pour $\alpha = 0,3$, le seuil d'oscillation est diminué d'un facteur 2,5 par rapport à un arrangement sans rayonnement pompe retour. Au-delà de $\alpha = 0,3$, la valeur du seuil d'oscillation varie peu avec $\alpha$, quelque soit la durée des impulsions du rayonnement pompe.

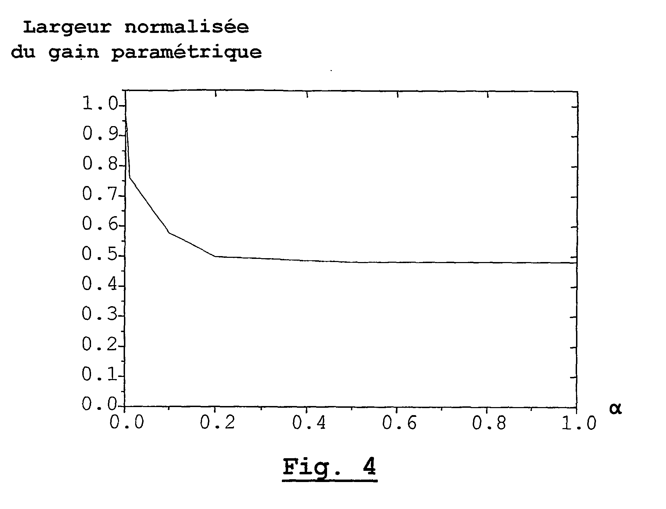

Il convient de noter que cette fourchette de valeurs de $\alpha$ entre 0,1 et 0,3 permet aussi de réduire de façon significative la largeur de gain paramétrique comme le montre la figure 4 où est portée l'évolution de cette largeur de gain en fonction du paramètre $\alpha$ en considérant un rayonnement pompe continu. La figure 4 montre clairement que pour des valeurs de $\alpha$ supérieures à 0,3, la largeur de gain n'évolue plus.

De l'analyse précédente, il ressort que le fonctionnement des OPO doublement résonnants à cavité linéaire ou repliée est notablement amélioré par la présence du dispositif 4, réfléchissant en sortie de cavité une fraction du rayonnement pompe, entre 10 et 30%, comparable à l'intensité du rayonnement pompe qui serait créée par reconversion, en absence de rayonnement pompe retour. Contrairement aux géométries à double passage de l'art antérieur où la totalité du rayonnement est réutilisée [A. Bandilla, W. Brunner, R. Fischer, H. Paul, 'Dispositif pour réduire l'énergie de pompage dans le cas d'oscillateurs paramétriques optiques', brevet FR 2 093 928, (1971)], l'adaptation en phase et en intensité du rayonnement pompe retour proposée dans l'invention est particulièrement avantageuse car elle permet de :

- réduire l'intensité du rayonnement pompe retour en direction du laser et par conséquent ne pas nécessiter un renforcement du niveau d'isolation optique entre le laser 1 et l'OPO 3;
- ne pas créer, par interférences entre les champs de pompe aller et retour, les maxima d'intensité pouvant être localement intenses au point d'endommager le cristal ou les traitements optiques ;
- utiliser la réflexion de Fresnel d'une surface optique dépourvue de traitement optique donc présentant un faible coût de fabrication.
- accroître la gamme d'accord continu en fonctionnement monomode longitudinal, comme présenté dans EP 0855616.

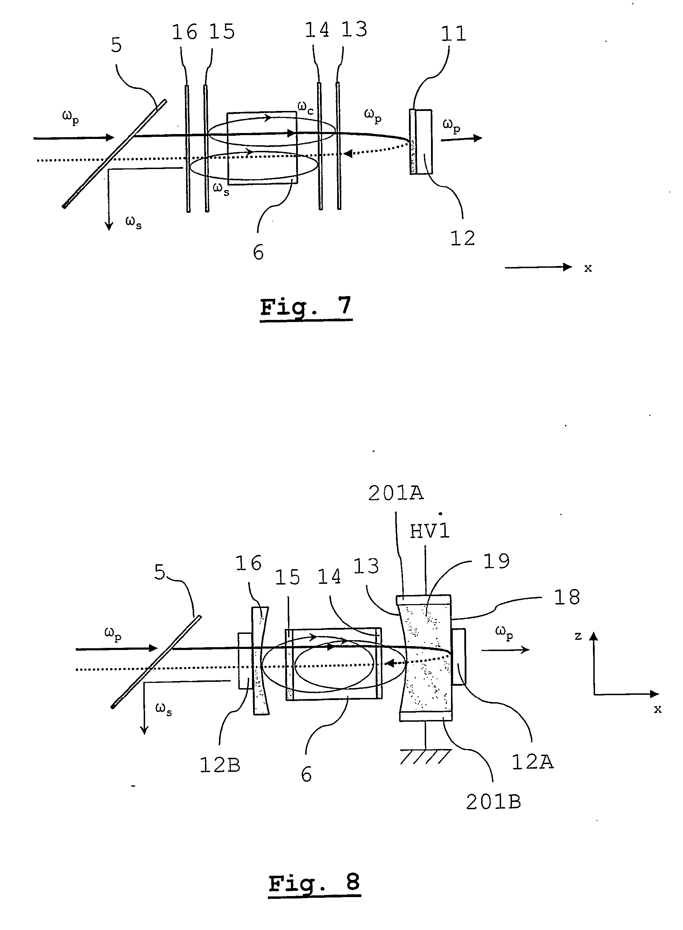

La figure 5 illustre une mise en oeuvre de l'invention pour une géométrie repliée de l'art antérieur. La lame 5, insérée dans le résonateur de l'OPO, permet de séparer les rayonnements signal et complémentaire afin qu'ils oscillent respectivement entre les couples de miroirs (7, 9) et (7, 8). Le rayonnement pompe est introduit à travers le miroir 7 avant de traverser le cristal 6, placé dans la partie commune aux deux cavités. Le rayonnement signal est disponible en sortie du miroir 9, partiellement réfléchissant à la pulsation $\omega_s$. Cet arrangement offre la possibilité de placer le dispositif 4 en sortie du miroir 8 qui est réfléchissant à $\omega_c$ et totalement transparent à $\omega_p$. De cette façon, l'insertion du dispositif 4 n'interagit pas avec les rayonnements signal et complémentaire. Le dispositif 4 comprend une cale piézo-électrique 12 solidaire d'une lame revêtue d'un traitement diélectrique 11 destiné à réfléchir une fraction $\alpha$ d'environ 0,2 fois le rayonnement pompe sortant du cristal. En commandant par un moyen électrique adapté la cale piézo-électrique 12, il est possible de modifier finement la position de l'élément 11 selon l'axe x et ainsi d'ajuster la phase $\varphi_p$ du retour de pompe adapté afin de pouvoir obtenir la relation de phase de (I).

L'arrangement de la figure 6 est relatif à une géométrie linéaire à cavités imbriquées conforme à EP 0855616. Le cristal 6 est inséré dans la partie commune aux deux cavités formées par les couples de miroirs (13, 15) et (14, 16), tous ces miroirs sont transparents à $\omega_p$. Les miroirs 13 et 15 sont totalement réfléchissants à $\omega_c$ et le miroir 15 est

transparent à $\omega_s$. A l'inverse, le miroir 14 est totalement transparent à $\omega_c$ et réfléchissant à $\omega_s$. Le rayonnement signal est extrait à travers le miroir 16, partiellement réfléchissant à $\omega_s$. La séparation entre le rayonnement signal et le rayonnement pompe non converti est obtenue au moyen de la lame 5 qui est insérée entre la sortie de l'OPO et l'ensemble des éléments 11 et 12 qui assurent, comme précédemment, le retour adapté en phase d'une fraction du rayonnement pompe.

Comme le montre la figure 7, la mise en oeuvre de l'invention s'étend immédiatement à un arrangement pour lequel le rayonnement signal est extrait au travers du miroir 16, qui est cette fois disposé en entrée de résonateur. La lame séparatrice 5 est alors placée sur le trajet du rayonnement pompe, avant la traversée du cristal non linéaire. Cette configuration présente l'avantage de pouvoir diminuer la distance séparant le miroir 13 de la face 11 et ainsi de rendre l'ensemble de la source plus compacte et donc plus robuste. Précisons toutefois que l'adaptation en phase et en amplitude du rayonnement pompe est ici particulièrement utile car, sans cette adaptation, l'effet de reconversion serait particulièrement important du fait que, au retour à travers le cristal, les rayonnements signal et complémentaire sont présents dans leur totalité.

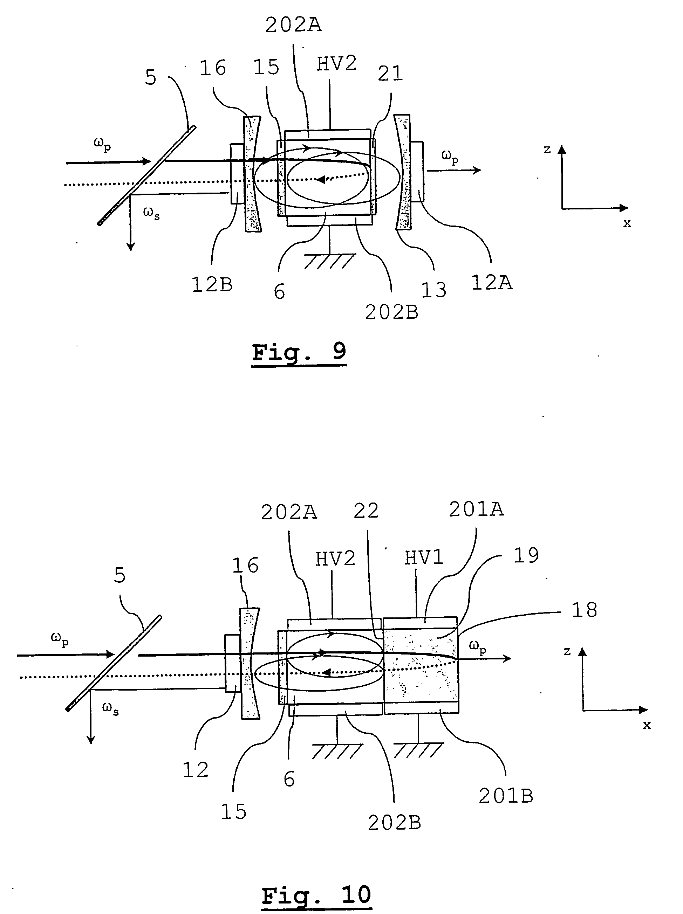

La figure 8 présente une réalisation semi-monolithique de l'invention. Par souci de compacité, les miroirs 14 et 15 sont directement déposés sur les faces externes du cristal non linéaire, celui-ci peut être du niobate de lithium périodiquement retourné (PPLN). Chaque miroir extérieur 13 et 16 est maintenu par une cale piézoélectrique respectivement 12A et 12B ou un microsystème de type MEMS (micro electro mechanical system) permettant d'ajuster électriquement les longueurs de chaque cavité optique. Le retour partiel du rayonnement pompe est assuré par la face arrière 18 du disque 19 revêtu sur la face avant d'un traitement miroir 13. Le dispositif se caractérise ici par le fait que la fonction recherchée est assurée par la réflexion de Fresnel sur la face arrière 18 d'un disque 19 en matériau électro-optique, dépourvu de traitement optique. Le niobate de lithium non retourné peut être avantageusement choisi pour obtenir un coefficient de réflexion de 14%, compatible avec la valeur souhaitée ($0,1 < \alpha < 0,3$) sans produire de conversion paramétrique parasite dans le disque 19. Deux électrodes 201A et 201B sont disposées de part et d'autre du disque 19, suivant son axe cristallographique c (l'axe z de la figure 8). Une tension HV1 appliquée entre ces électrodes crée un champ électrique suivant ce même axe. Le champ électrique a pour effet de modifier l'épaisseur du disque 19 selon l'axe x de la figure, donc la longueur optique parcourue par le rayonnement pompe. L'épaisseur du disque 19 entre le miroir 13 et la face arrière 18 est typiquement de 6 mm afin de pouvoir modifier la longueur optique traversée par le rayonnement pompe d'une quantité suffisante, soit d'environ 1 $\mu$m pour un aller et retour suivant l'axe x du cristal indiqué sur la figure 8. Le champ électrique à appliquer est alors modéré, de l'ordre de 0,5 kV/mm. L'ajustement de la phase du rayonnement retour est obtenu en faisant varier la longueur optique parcourue par le rayonnement pompe au moyen de la tension HV1 appliquée entre les électrodes 201A et 201B. L'accord en fréquence de l'OPO se fait en modifiant la position des miroirs 13 ou 16 au moyen des cales piézoélectriques respectivement 12A et 12B. La tension HV1 appliquée entre les électrodes 201A et 201B est alors réajustée pour maintenir l'adaptation en phase du rayonnement retour.

La figure 9 présente une configuration pour laquelle le cristal non linéaire 6 assure la double fonction : conversion paramétrique et retour de pompe adapté en phase et en intensité. Dans ce but, la face de sortie du cristal est revêtue d'un traitement optique 21 qui permet de réfléchir typiquement 20% de l'intensité du rayonnement pompe, tout en étant entièrement réfléchissant au rayonnement signal et totalement transparent au rayonnement complémentaire. De plus, le cristal est inséré entre deux électrodes 202A et 202B, disposées de part et d'autre suivant son axe cristallographique c, sur lesquelles est appliquée une tension électrique HV2 qui permet de modifier la longueur du cristal par effet électro-optique et obtenir ainsi l'adaptation en phase du rayonnement pompe partiellement réfléchie. Cette configuration présente deux avantages. D'une part elle réduit le nombre de traitements optiques nécessaires à la mise en oeuvre de l'invention. D'autre part, elle est peu contraignante sur les spécifications du traitement 21 car il suffit que la réflexion de ce miroir soit comprise entre 10 et 30 % pour obtenir le retour du rayonnement pompe adapté en intensité.

Dans la figure 10, la face de sortie du cristal 6 est revêtue d'un traitement optique 22 permettant de réfléchir les rayonnements signal et complémentaire tout en assurant une transmission maximale au rayonnement pompe. Cet arrangement permet de réduire le nombre de traitements optiques nécessaires à la réalisation de la source et ainsi son coût de fabrication. La mise en oeuvre de l'invention suivant le schéma de la figure 10 se caractérise par l'utilisation d'un disque électro-optique 19 disposé directement sur le cristal suivant les techniques d'adhérence et de collage connues de l'art antérieur. Comme précédemment, le retour de pompe adapté est assuré par la réflexion de Fresnel sur la face 18 du disque électro-optique 19. L'application d'une tension électrique HV1 entre les électrodes 201A et 201B permet d'ajuster la phase du rayonnement retour. De façon similaire, une variation de longueur de la cavité complémentaire est ici obtenue par effet électro-optique sur le cristal lui-même, en appliquant une tension HV2 entre les électrodes 202A et 202B. La cale piézo-électrique 12 permet d'ajuster séparément et sur une large plage la longueur de la cavité signal. De cette façon, il est possible d'accorder continûment la fréquence du rayonnement signal disponible en sortie d'OPO.

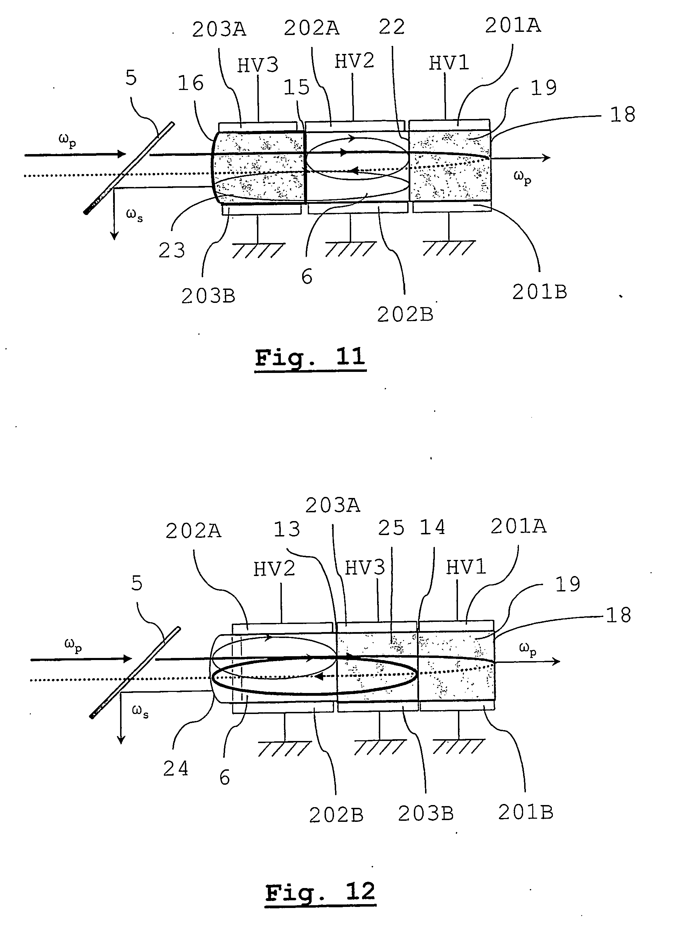

Les figures 11 et 12 schématisent des arrangements entièrement monolithiques pour lesquels les variations de longueur sont obtenues uniquement par effet électro-optique, en appliquant les tensions HV1, HV2 et HV3 respectivement aux électrodes 201A et 201B, 202A et 202B, 203A et 203B. Compte tenu des faibles variations de longueur et donc de variations de fréquence obtenues par effet électro-optique, l'utilisation d'un laser de pompe aisément accordable en fréquence telle qu'un laser à fibre peut s'avérer particulièrement avantageuse si une très large gamme d'accord spectrale est recherchée.

Dans l'arrangement représenté sur la figure 11, les rayonnements signal et complémentaire oscillent entre les couples de miroirs (16, 22) et (15, 22) respectivement. Le cristal non linéaire 6 étant inséré entre deux disques électro-optiques 19 et 23. Pour faciliter la réalisation pratique de la source, la surface des miroirs 15 et 22 est de préférence plane alors que le miroir 16 peut être concave. Dans cette configuration, seule la cavité signal est optiquement stable, le mode spatial de la cavité complémentaire est alors fonction de la répartition transverse du rayonnement pompe. Compte tenu que les deux cavités signal et complémentaire ont un miroir plan commun 22, l'oscillation des deux rayonnements s'établit nécessairement suivant le même axe. Il convient donc d'apporter une attention toute particulière à la qualité des traitements optiques pour éviter les couplages parasites entre les deux cavités.

La mise en oeuvre de cavités stables pour les deux rayonnements, présentant une sensibilité moindre aux couplages parasites peut être obtenue en suivant l'arrangement de la figure 12 pour lequel les rayonnements signal et complémentaire oscillent entre les couples de miroirs (24, 14) et (24, 13), respectivement. Afin de conserver des surfaces planes aux différents interfaces internes, les disques électro-optiques 19 et 25 sont maintenant placés du même côté du cristal 6. La face 24 du cristal 6 est partiellement réfléchissante au rayonnement signal afin d'assurer le couplage vers l'utilisation. De plus, cette face 24 est choisie concave pour que les deux cavités signal et complémentaire soient optiquement stables. Compte tenu de la concavité de 24, l'oscillation peut être obtenue en se fixant un léger angle (typiquement 0,1°) entre les surfaces 13, 14 et 18, ce qui permet de découpler les deux cavités signal et complémentaire. Ce mode de fonctionnement se caractérise donc par l'utilisation de disque électro-optique 19 et 25 légèrement prismatiques.

## Revendications

1. - Oscillateur paramétrique optique doublement résonnant comportant

   un cristal (6) non linéaire ayant une face avant et une face arrière,
   un rayonnement pompe entrant ($\omega_p$) effectuant un seul trajet aller à travers le cristal et sortant de celui-ci par sa face arrière,
   un rayonnement signal ($\omega_s$) et un rayonnement complémentaire ($\omega_c$) effectuant de nombreux trajets allers et retours à travers le cristal, ces deux derniers rayonnements se reconvertissant en un rayonnement pompe inverse à la fréquence du rayonnement pompe lors de leurs trajets retours à travers le cristal,
   un dispositif au niveau de la face avant du cristal non linéaire réfléchissant une fraction de l'intensité du rayonnement de pompe sortant de la face arrière du cristal de telle sorte que, en sortie de cristal, la relation de phase $\varphi_p$ - $\varphi_p$ - $\varphi_c$ = 0 [2$\pi$] soit vérifiée,

   **caractérisé en ce que** la fraction réfléchie de l'intensité du rayonnement pompe, appelée retour de pompe adapté, est sensiblement égale à l'intensité du rayonnement pompe inverse en l'absence du dispositif réfléchissant au niveau de la face avant du cristal non linéaire.

2. - Oscillateur paramétrique optique selon la revendication 1 **caractérisé en ce que** la fraction $\alpha$ de l'intensité du rayonnement pompe sortant de la face arrière du cristal I$_{ps}$, est comprise entre 0,1 et 0,3.

3. - Oscillateur paramétrique optique selon l'une des revendications précédentes **caractérisé en ce que** le dispositif réfléchissant comprend une surface optique, fonctionnant par réflexion de Fresnel, dépourvue de traitement optique.

4. - Oscillateur paramétrique optique selon l'une des revendications précédentes **caractérisé en ce que** le dispositif réfléchissant comprend la face arrière du cristal 6.

5. - Oscillateur paramétrique optique selon l'une des revendications précédentes **caractérisé en ce que** le cristal non linéaire est réalisé à partir d'un matériau de longueur optique variable.

6. - Oscillateur paramétrique optique selon l'une des revendications précédentes **caractérisé en ce que** le dispositif réfléchissant comporte un disque (19) réalisé dans un matériau de longueur optique variable dont la surface arrière est partiellement réfléchissante au rayonnement pompe.

7. - Oscillateur paramétrique optique selon la revendication 6 **caractérisé en ce que** le disque forme un seul bloc avec le cristal.

8. - Oscillateur paramétrique optique selon la revendication 7, **caractérisé en ce que** les faces avant et arrière du disque ne sont pas parallèles.

## Claims

1. A doubly-resonant optical parametric oscillator (5) that includes

    a non-linear crystal (6) having a front face and a rear face,
    an incoming pump radiation ($w_p$) that makes a single forward journey through the crystal and emerges from the latter by its rear face,
    a signal radiation ($w_s$) and a complementary radiation ($w_c$) that make many two-way trips through the crystal, with these last two rays reconverting into a reverse pump radiation at the pump radiation frequency during their return journeys through the crystal,
    a device (4) that reflects a fraction of the intensity of the pump radiation coming out of the rear face of the crystal so that, at the output of the crystal, the phase relation $\varphi_p - \varphi_s - \varphi_p = 0\ [2\pi]$ is verified,

    **characterised in that** the reflected fraction of the intensity of the pump radiation, called matched pump recycling, is roughly equal to the intensity of the reverse pump radiation in the absence of the reflecting device at the front face level of the non-linear crystal.

2. An optical parametric oscillator according to claim 1, **characterised in that** the fraction ($\alpha$) of the intensity of the pump radiation coming out of the rear face of the crystal ($I_{ps}$) is between 0.1 and 0.3.

3. An optical parametric oscillator according one of the preceding claims, **characterised in that** the reflective device includes an optical surface (1), operating by Fresnel reflection, and exempt from any optical treatment.

4. An optical parametric oscillator according one of the preceding claims, **characterised in that** the reflective device includes the rear face of the crystal (6).

5. An optical parametric oscillator according one of the preceding claims, **characterised in that** the non-linear crystal is created from a material with a variable optical length.

6. An optical parametric oscillator according one of the preceding claims, **characterised in that** the reflective device includes a disk (19) made from a material with variable optical length, whose rear face is partially reflective to the pump radiation.

7. An optical parametric oscillator according to claim 6, **characterised in that** the disk forms a single block with the crystal.

8. An optical parametric oscillator according to claim 7, **characterised in that** the front and rear faces of the disk are not parallel.

## Patentansprüche

1. Optisch parametrischer Oszillator mit Doppelresonanz, umfassend:

    einen nicht linearen Kristall (6) mit einer Vorderseite und einer Rückseite,
    eine eingehende Pumpstrahlung ($\omega_p$), die einen einzigen Hinweg durch den Kristall hindurch ausführt und aus diesem durch seine Rückseite austritt,
    eine Signalstrahlung ($\omega_s$) und eine komplementäre Strahlung ($\omega_c$), die zahlreiche Wege hin und zurück durch den Kristall ausführen, wobei diese beiden letzteren Strahlungen sich bei ihren Rückwegen durch den Kristall in eine inverse Pumpstrahlung mit der Frequenz der Pumpstrahlung umwandeln,
    eine Vorrichtung (4), die einen Teil der Intensität der aus der Rückseite des Kristalls austretenden Pumpstrahlung in der Weise reflektiert, daß am Ausgang des Kristalls die Phasenbeziehung $\varphi_p - \varphi_s - \varphi_c = 0\ [2\pi]$ erfüllt ist,

**dadurch gekennzeichnet, daß** der reflektierte Teil der Intensität der Pumpstrahlung, der als angepaßter Pumprücklauf bezeichnet wird, im Bereich der Vorderseite des nicht linearen Kristalls im wesentlichen gleich der Intensität der inversen Pumpstrahlung bei Abwesenheit der reflektierenden Vorrichtung ist.

2. Optisch parametrischer Oszillator nach Anspruch 1, **dadurch gekennzeichnet, daß** der Anteil $\alpha$ der Intensität der an der Rückseite des Kristalls austretenden Pumpstrahlung $I_{ps}$ zwischen 0,1 und 0,3 liegt.

3. Optisch parametrischer Oszillator nach einem der vorhergehenden Ansprüche, **dadurch gekennzeichnet, daß** die reflektierende Vorrichtung eine optische Fläche umfaßt, die über eine Fresnel-Reflexion arbeitet und die keine optische Verarbeitung aufweist.

4. Optisch parametrischer Oszillator nach einem der vorhergehenden Ansprüche, **dadurch gekennzeichnet, daß** die reflektierende Vorrichtung die Rückseite des Kristalls (6) umfaßt.

5. Optisch parametrischer Oszillator nach einem der vorhergehenden Ansprüche, **dadurch gekennzeichnet, daß** der nicht lineare Kristall auf der Basis eines Materials mit veränderlicher optischer Länge hergestellt ist.

6. Optisch parametrischer Oszillator nach einem der vorhergehenden Ansprüche, **dadurch gekennzeichnet, daß** die reflektierende Vorrichtung eine Scheibe (19) umfaßt, die aus einem Material mit veränderlicher optischer Länge hergestellt ist, dessen Rückfläche für die Pumpstrahlung teilweise reflektierend ist.

7. Optisch parametrischer Oszillator nach Anspruch 6, **dadurch gekennzeichnet, daß** die Scheibe mit dem Kristall einen einzigen Block bildet.

8. Optisch parametrischer Oszillator nach Anspruch 7, **dadurch gekennzeichnet, daß** die Vorderseite und die Rückseite der Scheibe nicht parallel sind.

**Fig. 1**

**Fig. 5**

**Fig. 6**

Fig. 2

Fig. 3

**Largeur normalisée
du gain paramétrique**

**Fig. 4**

**Fig. 7**

**Fig. 8**

**Fig. 9**

**Fig. 10**

**Fig. 11**

**Fig. 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3628182 A
- EP 0855616 A
- US 5754333 A
- FR 2093928

**Littérature non-brevet citée dans la description**

- **B. SCHERRER ; I. RIBET ; A. GODARD ; E. ROSENCHER ; M. LEFEBVRE.** Dual-cavity doubly resonant optical parametric oscillators : démonstration of pulsed single-mode operation. *J. Opt. Soc. Am. B,* 2000, vol. 17 (10), 1716-1729
- **F.G. COLVILLE ; M.J. PADGETT ; M. H. DUNN.** Continuous wave, dual-cavity, doubly resonant, optical parametric oscillator. *Appl. Phys. Lett.,* 1994, vol. 64, 1490-1492
- **D. LEE ; N. C. WONG.** *Appl. Phys. B,* 1998, vol. 66, 133-143
- **J.E. BJORKHOLM ; A. ASHKIN ; R. G. SMITH.** Improvement of optical parametric oscillators by non resonant pump reflection. *IEEE, J. of Quant. Electron.,* 1970, vol. QE-6 (12), 797-799
- **C. DRAG ; I. RIBET ; M. JEANDRON ; M. LEFEBVRE ; E. ROSENCHER.** Temporal behaviour of a high repetition rate infrared optical parametric oscillator based on periodically poled materials. *Appl. Phys. B,* 2001, vol. 73, 195-200